Europäisches Patentamt

**European Patent Office**                    (11) Publication number: **0 110 430**

Office européen des brevets                                   **A2**

(19)

(12)                            **EUROPEAN PATENT APPLICATION**

(21) Application number: **83200338.8**              (51) Int. Cl.³: **B 65 B 25/06,** B 65 B 55/12,
                                                            A 23 L 1/04, A 23 L 3/00
(22) Date of filing: **11.03.83**

(30) Priority: **22.03.82 SE 8201794**

(43) Date of publication of application: **13.06.84**
     **Bulletin 84/24**

(84) Designated Contracting States: **BE DE FR GB IT NL SE**

(71) Applicant: **TETRA PAK DEVELOPPEMENT SA, P.O.**
     **Box 181, CH-1009 Pully (CH)**

(72) Inventor: **Rausér, Marita, Karstorpsvägen 26,**
     **S-234 00 Lomma (SE)**

(74) Representative: **Sevrell, Sven-Gösta Uno, Tetra Pak**
     **International AB Patent Department Box 1701,**
     **S-22101 Lund 1 (SE)**

(54) **A method for the treatment and packaging of a food product.**

(57)    The invention relates to a method for the treatment and
packaging of a food product, in particular fish, comprising a
grinding or breaking down of the product so that it obtains a
fluid or semi-fluid consistency. To the ground product is added
a coagulating substance which consists of sodium alginate.
The product is sterilized through the effect of heat, and it is
then packed in sterile packages under aseptic conditions. In
these packages the product obtains solid consistency as a re-
sult of the sodium alginate reacting chemically with calcium
compounds which contain strongly complex-bonded calcium
ions and which are added to, or are present in, the product, to
form calcium alginate.

0110430

## A METHOD FOR THE TREATMENT AND PACKAGING OF A FOOD PRODUCT

The present invention relates to a method for the treatment and packaging of a food product, in particular a food product based on fish.

In the Swedish patent application 7800776-2 a method is described for the treatment and packaging of a food product, wherein the raw material required for the food product is treated by a mechanical and/or enzymatic method and is broken up into particles so as to form a substantially homogeneous fluid or semifluid product which is heated so that the proteins of the product are made, at least partially, to coagulate and the product becomes sterile. The coagulated product is then cooled down to a temperature below the coagulating temperature and is processed and homogenized again to fluid or semifluid form. Finally the sterilized product is packaged under aseptic conditions in bacteria-tight packages in which the product is made to congeal to semisolid or solid form.

The present invention is an improvement of the method described in the said Swedish patent application and it is its primary object to produce a food product with good keeping qualities which after removal from the package retains its solid consistency without substantial change of shape. This is achieved in that during the processing of the raw material certain coagulating substances are added which will be described in more detail below.

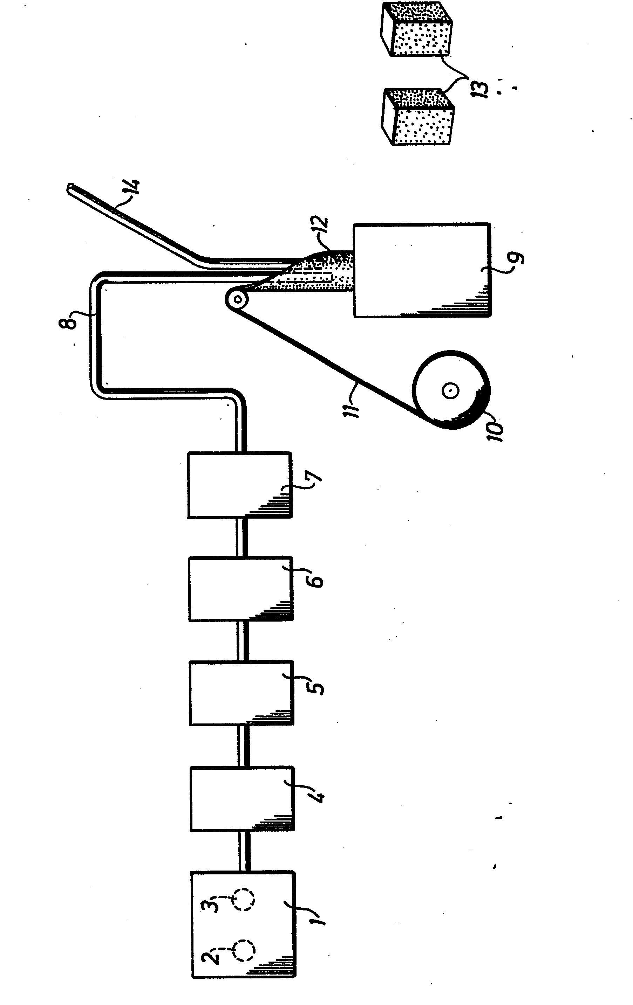

In the following the invention will be described in more detail with reference to the enclosed schematic drawing which shows a process diagram of the realization of the invention. The process equipment shown in the figure comprises a grinding unit 1 including a coarse grinder 2 and a fine grinder 3 and a blending tank 4. The equipment also comprises a buffer tank 5, a sterilizer 6, a further grinder 7 which operates in a sterile environment and a packaging machine 9. The packaging machine 9, in a manner known in itself, comprises a- magazine roll 10 of packing material, from which is rolled off a web 11 to be formed to a tube 12, which is then filled with contents from the filler pipes 8 and 14 respectively, sealed and form-processed to give closed packing containers 13.

The process equipment shown in the figure may be placed on board a depot ship which follows and serves a greater number of fishing vessels, but may also be stationed on land. The raw materials for the process may consist, for example, of prawns, cleaned or uncleaned fish, fish guttings, cuttlefish, mussels etc. A specially preferred raw material consists of lightly frozen blocks of rough-cleaned, precoagulated fish, the precoagulation having been carried out by heating to at least approx. 70 $^o$C. This fish does not have to be completely freed of bones, but it can instead be an advantage if bones are present in the raw material, which later in the process will be disintegrated by grinding. It has been found in fact, that in accordance with the invention, use can be made of the calcium content in such bones for the coagulation of the product. Furthermore, suitable condiments such as salt, prawn-shell concentrate etc. may be added to the raw material.

The process is initiated by allowing the raw material to pass the coarse grinder 2 and subsequently the fine grinder 3, the particle size of the material on leaving the coarse grinder 2 being generally approx. 5 mm and the particle size of the material which leaves the fine grinder 3 being generally approx. 1 mm. If substantially fine material is to be ground, this can be done directly in the fine grinder 3. The material so ground is introduced into a blending tank 4.

A coagulating agent is added to the grinding unit 1. Usually the coagulating agent is added in the form of an aqueous solution, and as a coagulating agent preferably sodium alginate is used. Such an aqueous solution should be as concentrated as possible, but it must still be easy to handle. A suitable solution is a 3 per cent sodium alginate solution and this is introduced preferably in warm condition between the coarse grinder 2 and the fine grinder 3, the warm alginate solution having a lubricating and thawing effect and making it possible for a slow-flowing, pumpable flow of product to be withdrawn from the grinding unit 1 to the blending tank 4. The addition of the alginate solution has the object of producing a reaction between the alginate and calcium compounds, which are present in the product or have been added, to form a thermostable gel which imparts solid consistency to the product. The calcium compounds may be added separately but they also may be present in the raw material in the form of ground bones and other fish residues containing calcium. It is the intention that the said reaction, which imparts solid consistency to the product, shall occur substantially only after the product has been packed in the bacteria-tight packages. If the aforementioned 3 per cent aqueous solution of sodium alginate is used, a calcium alginate concentration in the end product of approx. 1.4 % is obtained.

In the case where the calcium compounds are to be added separately, this is done preferably in the blending tank 4. Examples of such calcium compounds are calcium phosphate and/or calcium citrate. Other calcium compounds, where in the calcium ion is fairly strongly complex-bonded, may also be used. As an alternative the calcium compounds may be added dissolved in the alginate solution.

The raw material so treated is subsequently introduced into a buffer tank 5. Before the buffer tank 5 all treatments have taken place in batches whilst from the buffer tank 5 onwards and up to the finished packages the treatment of the product is done continuously.

From the buffer tank 5 the product is pumped into a sterilizer 6, preferably a so-called stripping sterilizer of the type which is marketed under the trade-mark CONTERM, in which the fluid or semifluid product is heated to a temperature of 120-140 °C during a period ranging from 2 seconds to 2 minutes with constant stirring. The length of the treatment time here is adapted appropriately to the size of the individual particles in the fluid or semifluid product.

In this heat treatment, beside sterilization of the product, a certain coagulation of proteins included in the product is taking place (except in the case where a precoagulated raw material is used from the outset) with the result that the product obtains, wholly or partially, a firmer consistency.

After the said heat treatment the product is cooled, preferably to a temperature of 50 °C, with the help of a stripping heat exchanger, not shown. To satisfy the requirement of sterility, all operations after the sterilization are performed in sterile environment. As an example of such operations may be mentioned the introduction of the sterilized but cooled product into a further grinder 7 in the form of a sterile grinder, wherein the product is subjected to a mechanical processing to fluid or semifluid form which is necessary for the carrying out of the packaging operation. In order to promote the coagulation of the final product in its packing container, packages thereof may be passed through sterile filters or else agents which lower the pH-value may be added. As an example of such agents may be mentioned glucono delta lactone, GLD, which is added preferably in a concentration of approx. 0.7 %. By lowering in this manner the pH value of the product a control of the coagulating period is obtained. For a further increase of the quality of the end product it is possible prior to the introduction of the product into the grinder 5 to inject a sterile gas with the object of rendering the product more fluffy or porous.

The product so treated is now ready for the packaging operation which is carried out in the following manner.

In the packaging machine a web 11 of plastic-coated paper which is rolled off a magazine roll 10 is converted to a tube 12 in that the longitudinal edges of the web are joined together by welding together the plastic coatings of the edge zones facing one another with the help of heat and pressure. The tube 12 formed is sterilized on the inside in that a chemical sterilizing agent, e.g. hydrogen peroxide, is applied to the web 11 beforehand, and is subsequently heated and evaporated, in that the inner walls of the tube 12 are heated by a radiation element which is introduced into the tube. Through the combined effect of heat and hydrogen peroxide all bacteria on the packing material along the inside of the tube 12 are killed, whereupon the sterilized product, which is supplied through the pipe 8, is introduced into the tube which is sealed off by means of pressure and heat along narrow seals following one another transversely to the longitudinal axis of the tube, so that the sterilized product is enclosed in a bacteria-tight manner in the sterilized package. The tube part divided by means of transverse sealing can then be separated from the rest of the tube by a cut through a transverse sealing zone, whereupon the said separated tube part can be form-processed, e.g. so as to form a parallelepipedic or tetrahedral packing container 13. If it is desired that the packaged product should contain larger pieces of e.g. fish, such pieces can be sterilized separately and be supplied later to the tube 12 in portions through the separate filler pipe 14, and portioned out so that a suitable quantity of fish pieces will be present in each packing unit.

The packing containers 13 now contain a fluid or semifluid product which during the storage time congeals and assumes a semisolid or solid consistency. The change in consistency from fluid-semifluid form to solid-semisolid form takes place as a consequence of a conversion of sodium alginate to calcium alginate.

Through the correct choice of coagulating agent and the concentration thereof and by optimization of the rest of the process, it has been possible in accordance with the invention to obtain a protein-rich, tasty food product starting out from a raw material which otherwise would largely be lost as fish waste and the like. In accordance with the invention a product has been obtained which after its removal from the package retains its physical shape right up to its being used.

Modifications are possible within the scope of the concept of the invention. Thus further agents imparting consistency may be added during the processing, such as carrageen and carob-seed meal. To enrich the product in nutritional value soybean meal, dry milk powder etc. may be added. The sodium alginate added may be at room temperature when it is introduced, but it may be advantageous in certain cases to heat up the sodium alginate solution to approx. 70 $^{\circ}$C so as to obtain a better thawing effect of the frozen raw material.

## CLAIMS

1. A method for the treatment and packaging of a food product comprising a grinding or breaking down of the product, so that it obtains a fluid or semifluid consistency, sterilization of the product through the effect of heat, addition of coagulating substances and packaging of the product in sterile packages under aseptic conditions, c h a r a c t e r i z e d   i n   t h a t   at least one of the coagulating substances consists of sodium alginate.

2. A method in accordance with claim 1, c h a r a c t e r i z e d   i n   t h a t   the sodium alginate is added as an approx. 3 per cent aqueous solution.

3. A method in accordance with claim 2, c h a r a c t e r i z e d   i n   t h a t   the sodium alginate solution is added to the raw material before or during its grinding.

4. A method in accordance with claim 1, c h a r a c t e r i z e d   i n   t h a t   the sodium alginate solution on addition is heated to 50 - 70 $^{\circ}$C.

5. A method in accordance with claim 1, c h a r a c t e r i z e d   i n   t h a t   calcium compounds wherein the calcium ions are strongly complex-bonded, for example calcium phosphate or calcium citrate, are added to the raw material before the sterilizing operation.

6. A method in accordance with claim 1, c h a r a c t e r i z e d   i n   t h a t   the sodium alginate and the calcium compounds chemically react with each other to form calcium alginate as a result of which the consistency of the product becomes considerably more solid.

7. A method in accoreance with claim 6, c h a r a c t e r i z e d   i n   t h a t   the said reaction between the calcium compounds and the sodium alginate substantially takes place whilst the product is enclosed in its sterile package.

8. A method in accordance with claim 1, c h a r a c t e r i z e d   i n   t h a t   the calcium alginate concentration in the end product is not lower than 1 % by weight and that it is preferably 1.4 %.

0110430

9. A method in accordance with claim 1,
characterized in that the ground raw material
contains natural calcium compounds in the form of bones etc.